# EUROPEAN PATENT APPLICATION

(11) **EP 1 063 781 A1**
(43) Date of publication of application: **27.12.2000**
(21) Application number: 99440150.3
(22) Date of filing: 18.06.1999
(51) Int. Cl.: H04B 1/707, H04B 7/08

(54) **Method of finding the best transmission channels for a CDMA signal, and components therefor**

(71) Applicant: ALCATEL, 75008 Paris (FR)
(72) Inventor: Dillenburger, Martin, 71723 Grossbottwar (DE)
(74) Representative: Brose, Gerhard, Dipl.-Ing.

(57) **Abstract**

A method of finding optimum transmission channels within a given time window for a CDMA signal which is encoded in a given transmission code and received by an antenna array comprises the steps of:
(a) receiving CDMA signals within the time window at different instants by means of a number of antennas;
(b) filtering out components of a particular CDMA signal for each of the different instants within the time window and for each antenna;
(c) determining the phase relations (covariance matrix) between all antennas or between the antenna signals for each instant;
(d) determining the respective weight vectors from the covariance matrix for each instant;
(e) adding all signal components of the particular CDMA signal received at a given instant, applying the weight vector for this instant;
(f) determining the respective power for each individual instant; and
(g) selecting the instant or instants with the highest power as the sampling point or sampling points which indicate the best transmission channels for the particular CDMA signal.

## Description

This invention relates to a method of finding optimum transmission channels within a given time window for a CDMA signal encoded in a given transmission code and received by an antenna array, as well as to a facility, a base station, and program, software, and computer modules for carrying out the method.

Due to reflections from obstacles, a radio signal transmitted by a mobile station of a telecommunications network, for example, reaches the receiver (e.g., a base station) by two or more paths with different delays (so-called multipath propagation). The components of the same radio signal which are transmitted on these different paths have different amplitudes and carrier phases.

Such interference problems arise particularly during transmission at high transmission rates if - as during transmission by the CDMA technique (CDMA = code division multiple access) - the delay differences are great compared to the signal duration or bit duration. In CDMA, a given transmission code is superposed on the signals to be transmitted. To find the optimum demodulation structure in the presence of multipath, specific CDMA receivers (so-called Rake receivers) are used.

It is the object of the invention to provide a method of finding the usable components among the plurality of CDMA signal components caused by multipath, as well as components for carrying out this method.

According to the invention, this object is attained by a method comprising the steps of:
(a) receiving CDMA signals within the time window at different instants by means of a number of antennas;
(b) filtering out components of a particular CDMA signal for each of the different instants within the time window and for each antenna;
(c) determining the phase relations (covariance matrix) between all antennas or between the antenna signals for each instant;
(d) determining the respective weight vectors from the covariance matrix for each instant;
(e) adding all signal components of the particular CDMA signal received at a given instant, applying the weight vector for this instant;
(f) determining the respective power for each individual instant; and
(g) selecting the instant or instants with the highest power as the sampling point or sampling points which indicate the best transmission channels for the particular CDMA signal.

To smooth out the power profile determined for the time window and thereby reduce the effect of noise, the power profile determined for the time window in step (f) can be averaged prior to the selection of the best transmission channel(s) using power profiles determined for preceding time windows.

The invention also relates to a facility and program, software and computer modules for carrying out this method as well as to a base station with such a facility.

Further advantages of the invention will become apparent from the following description when taken in conjunction with the accompanying drawings. According to the invention, the aforementioned features and the features described in the following can be used alone or in arbitrary combinations. While a particular embodiment of the invention is shown and described, it is to be understood that the description is made only by way of example and not as a limitation to the scope of the invention.

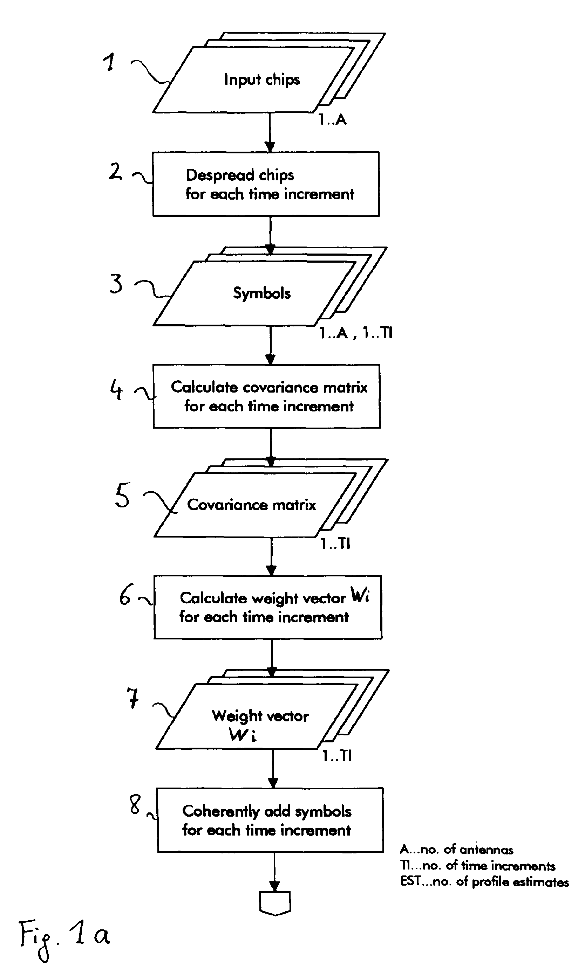

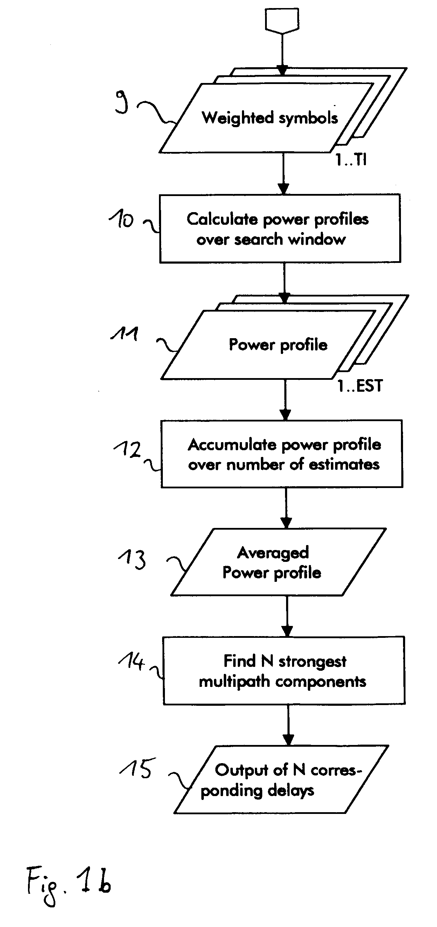

Fig. 1 is an exemplary flowchart showing the steps of the method according to the invention. The individual steps (operations) are shown as rectangles, and the respective results as parallelograms.

Shown at 1 are the different CDMA signals ("chips") which were all received by an antenna array within a given time window (e.g., 20µs) at different instants TI (e.g., I=1, ..., 80).

In step 2, those components of the CDMA signals which are encoded in a given transmission code are filtered out of the CDMA signals for each instant TI and for each antenna by despreading the chips. This gives the signal components ("symbols") shown at 3.

In step 4, the phase relations between all antennas are determined for each instant TI to obtain the covariance matrix shown at 5. From this covariance matrix, the respective weight vector Wi is determined for each instant TI in step 6, the weight vector Wi being shown schematically at 7.

Then, in step 8, the individual filtered signal components are coherently added for each instant TI, i.e., all filtered CDMA signals received at an instant TI are added after being weighted with the weight vector (Wi) for this instant TI. This gives the weighted signal components shown at 9. The theoretical gain is 10 log (A) dB, where A is the number of antennas.

From this, the respective power is determined for each instant TI in step 10 to obtain the power profile or delay profile for the entire time window, this profile being shown at 11.

To smooth out this power profile determined for the time window and reduce the effect of noise, in step 12, the power profile is averaged over a number of time windows ("estimates") using power profiles determined for preceding time windows.

From this averaged power profile, which is shown at 13, the instant or instants TI with the highest power (peaks) are selected in step 14 as the sampling point or sampling points (strongest multipath component or components) which indicate the best transmission channels for the desired CDMA signal. The best transmission channels thus found, which are delayed with respect to each other, are output in step 15 for further processing. In this manner, the desired number of peaks can be selected from the power profile and the associated time delays can be output to the subsequent signal processing stages (e.g., channel estimator, combiner).

The method described can be carried out with a facility referred to as a spatial multipath searcher (SMS). The SMS uses a number of RX antennas in array or diversity configuration and the above-described beamforming algorithm to determine the phase relation between the multipath components at the antenna inputs.

## Claims

1. A method of finding optimum transmission channels within a given time window for a CDMA signal encoded in a given transmission code and received by an antenna array, said method comprising the steps of:
(a) receiving CDMA signals within the time window at different instants by means of a number of antennas;
(b) filtering out components of a particular CDMA signal for each of the different instants within the time window and for each antenna;
(c) determining the phase relations (covariance matrix) between all antennas or between the antenna signals for each instant;
(d) determining the respective weight vectors from the covariance matrix for each instant;
(e) adding all signal components of the particular CDMA signal received at a given instant, applying the weight vector for this instant;
(f) determining the respective power for each individual instant; and
(g) selecting the instant or instants with the highest power as the sampling point or sampling points which indicate the best transmission channels for the particular CDMA signal.

2. A method as claimed in claim 1, characterized in that the power profile determined for the time window in step (f) is averaged using power profiles determined for preceding time windows, and that said averaged power profile is used in step (g) to select the best transmission channel(s).

3. A facility ("spatial multipath searcher") for carrying out the method of claim 1.

4. Program, software, and computer modules for carrying out the method of claim 1.

5. A base station with a facility as claimed in claim 3.
